# EUROPÄISCHE PATENTSCHRIFT

(11) **EP 1 849 700 B1**
(45) Veröffentlichungstag und Bekanntmachung des Hinweises auf die Patenterteilung: **15.04.2009**
(21) Anmeldenummer: 06008958.8
(22) Anmeldetag: 28.04.2006
(51) Int. Cl.: B62M 11/18

(54) **Mehrgangnabe mit Planetengetriebe**
Multi-speed gear hub with planetary gear mechanism
Moyeu à plusieurs vitesses avec engrenage planétaire

(43) Veröffentlichungstag der Anmeldung: 31.10.2007
(73) Patentinhaber: SHIMANO INC., Osaka 590-8577 (JP)
(72) Erfinder: Okochi, Hiroyuki, Yamaguchi 752-0911 (JP)
(74) Vertreter: Hofmann, Harald

(56) Entgegenhaltungen:
- EP-A- 0 383 350
- EP-A- 1 571 077
- WO-A-97/24252
- DE-A1- 4 142 867
- DE-A1- 19 828 829
- DE-A1-9102004 014 23
- US-A- 5 527 230

## Beschreibung

Die vorliegende Erfindung bezieht sich auf eine Getriebeanordnung für eine Mehrgangnabe, beispielsweise für ein Fahrrad, und insbesondere auf eine Getriebeanordnung mit einem ersten und zumindest einem zweiten Planetengetriebe.

Ein Fahrradgetriebe für eine Mehrgangnabe mit zwei Planetengetrieben ist beispielsweise in der DE 41 42 867 A1 offenbart. Die aus dieser Druckschrift bekannte Anordnung umfasst im Wesentlichen eine feststehende Welle, ein Antriebsteil und eine Nabenhülse, sowie eine Mechanik zur Übertragung des Antriebsmoments vom Antriebsteil auf die Nabenhülse. Die Übertragungsmechanik umfasst insbesondere ein erstes Planetengetriebe und ein zweites Planetengetriebe, das zwischen dem ersten Planetengetriebe und dem Antriebsteil angeordnet ist, sowie einseitig wirksame Schaltkupplungen und einseitig wirksame Sonnenrädkupplungen, wobei die Planetengetriebe so angesteuert werden, dass das Antriebsmoment in verschiedenen Gangstufen übertragen werden kann. Die Betätigung der auf die Sonnenräder nur in einer Richtung einwirkenden Kupplungen erfolgt durch positionsbezogene Beziehungen von Vorsprüngen, die auf der feststehenden Welle angeformt sind, relativ zu Betätigungselementen, die auf einem auf Umfangsflächen der feststehenden Welle verschiebbaren Schaltelement angeordnet sind. Obwohl das Fahrradgetriebe gemäß dieser Druckschrift an sich funktioniert, weist es dennoch Nachteile auf. Beispielsweise kann es beim Schalten der Gänge zu unerwünschten Geräuschen und einer für den Fahrer unangenehmen und unkomfortablen Ruckelwahrnehmung kommen. Des Weiteren erfordert dieser Aufbau eine relativ große Abmessung in radialer Richtung.

US-Patent Nr. 5,527,230 offenbart eine Mehrgang-Antriebsnabe für Fahrräder gemäß dem Oberbegriff von Anspruch 1 mit oder ohne Rücktrittbremse mit einem Nabenschaltgetriebe, welches aus einem ersten, einem zweiten und einem Differential-Planetenradsatz besteht. Ein Differential-Hohlrad, das zum Differential-Planetenradsatz gehört, ist über eine in einer Drehrichtung wirkende Kupplungseinrichtung mit einer Nabenhülse verbunden. Je nach Drehzahl des ersten und des zweiten Hohlrades des ersten und des zweiten Planetenradsatzes dreht sich das Differential-Sonnenrad und der zweite Planetenradträger des Differential-Planetenradsatzes mit unterschiedlichen Drehzahlen, wobei einmal das Differential-Sonnenrad oder einmal der zweite Planetenradträger des Differential-Planetenradsatzes schneller läuft, was zur Folge hat, daß die Vielzahl von Gängen, die durch das abwechselnde Stillsetzen der Sonnenräder des ersten und zweiten Planetenradsatzes auf der Nabenachse am ersten und zweiten Hohlrad entstehen, von dort in den Differential-Planetenradsatz eingeleitet wird.

Es ist eine Aufgabe der vorliegenden Erfindung eine Getriebeanordnung einer Mehrgangnabe zu verbessern. Insbesondere soll der Gangwechsel für einen Fahrer angenehmer erfolgen und das Fahrgefühl während des Gangwechsels verbessert werden. Des Weiteren soll eine einfache, kompakte, einen schlanken Aufbau aufweisende Getriebeanordnung geschaffen werden, die trotzdem zuverlässig im Betrieb ist.

Die Aufgabe wird durch eine Getriebeanordnung, wie diese durch den unabhängigen Anspruch 1 beschrieben ist, gelöst, wobei zweckmäßige Ausführungsformen durch die Merkmale der Unteransprüche beschrieben sind.

Vorgesehen ist eine Getriebeanordnung für eine Mehrgangnabe, insbesondere für ein Fahrrad, die im Wesentlichen ein erstes Planetengetriebe und zumindest ein zweites Planetengetriebe umfasst. Außerdem ist ein Kopplungselement, das röhrenförmig ausgebildet und zwei oder mehrere unterschiedliche Durchmesser aufweisen kann, mit Zahnkränzen zum jeweiligen Eingriff mit dem ersten Planetengetriebe und dem zumindest einen zweiten Planetengetriebe bereitgestellt, so dass eine permanente Synchronisation zwischen den zumindest zwei Planetengetrieben erreicht wird. Die Zahnkränze zum jeweiligen Eingriff mit den zumindest zwei Planetengetrieben befinden sich vorzugsweise an den axialen Endbereichen des Kopplungselements, die unterschiedliche Durchmesser aufweisen können, und sind an einer Innenfläche des Kopplungselements bereitgestellt. Die Zahnkränze können mit den jeweiligen Planetenrädern der Planetengetriebe in Eingriff gebracht werden.

Wie es Fachleuten ersichtlich ist, umfasst ein Planetengetriebe im Wesentlichen, aber nicht einschränkend, zumindest ein um eine feststehende Welle einer Mehrgangnabe herum angeordnetes Sonnenrad, mit dem zumindest einen Sonnenrad in Eingriff tretende Planetenräder, einen die Planetenräder tragenden Planetenradträger, ein mit den Planetenrädern in Eingriff stehendes Hohlrad und optional zumindest eine zwischen dem zumindest einen Sonnenrad und der feststehenden Welle angeordnete Sonnenradkupplung, die so angeordnet und ausgelegt ist, dass sie mittels einer Steuereinrichtung betätigbar ist. Die erfindungsgemäße Getriebeanordnung kann in eine Mehrgangnabe integriert werden, die im Wesentlichen, aber nicht einschränkend, die vorstehend genannte feststehende Welle, einen Antreiber und eine Nabenhülse umfasst, die beide drehbar auf der feststehenden Welle abgestützt sind. Bei einer vorteilhaften Ausgestaltung sind die zumindest zwei Planetengetriebe in axialer Richtung voneinander beabstandet, wobei sich das Kopplungselement zwischen diesen erstreckt.

Das Kopplungselement kann zumindest zwei unterschiedliche Außendurchmesser aufweisen, wobei ein antriebsseitiger Außendurchmesser vorzugsweise größer ist als ein abtriebsseitiger Außendurchmesser. Die sich daraus ergebende Verjüngung kann mittels zumindest einer Abtreppung bzw. Versatz erfolgen. Alternativ kann diese aber auch kontinuierlich erfolgen, das heißt, der Durchmesser verkleinert bzw. vergrößert sich gleichmäßig ohne Abtreppung oder Versatz.

Des Weiteren kann das Kopplungselement einen dritten Zahnkranz zwischen den Planetengetrieben aufweisen. Dieser dritte Zahnkranz ist an einer inneren Umfangsfläche des Kopplungselements bereitgestellt.

Zwischen dem dritten inneren Zahnkranz und einem abtriebsseitigen Teil eines Planetenradträgers des ersten Planetengetriebes kann eine einseitig wirksame Kupplung angeordnet sein, so dass der dritte Zahnkranz mit dem abtriebsseitigen Teil des Planetenradträgers des ersten Planetengetriebes in Wirkverbindung treten kann. Der Planetenradträger ist vorzugsweise als einstückiges Teil ausgebildet.

Das Kopplungselement kann mit einem Schaft einer ersten Abtriebskupplung zwischen dem dritten Zahnkranz und vorzugsweise dem zweiten Planetengetriebe beidseitig in Eingriff stehen. Die erste Abtriebskupplung kann dazu in einer peripheren Ausnehmung bzw. einem Durchlass, der sich in dem Kopplungselement befindet, angeordnet sein.

Bei einer vorteilhaften Ausgestaltung ist das Kopplungselement als einstückiges Teil ausgebildet.

Des Weiteren kann die Getriebeanordnung eine Abtriebswahleinrichtung aufweisen, die mittels einer Steuereinrichtung längsverschieblich betätigbar ist, so dass der Abtrieb entweder über die erste Abtriebskupplung oder über eine zweite Abtriebskupplung erfolgt.

Die zweite Abtriebskupplung kann mit einem abtriebsseitigen Teil eines Planetenradträgers des zweiten Planetengetriebes in Wirkverbindung stehen. Der Planetenradträger ist vorzugsweise als einstückiges Teil ausgebildet.

Bei einer vorteilhaften Ausgestaltung ist ein antriebsseitiger Teil des Planetenradträgers des ersten Planetengetriebes dazu geeignet, als Antriebsteil zu wirken.

Des Weiteren kann jeweils eine Sonnenradkupplung zwischen den Planetenrädern der Planetengetriebe und der feststehenden Welle angeordnet sein. Vorzugsweise ist jeweils eine Sonnenradkupplung zwischen der feststehenden Welle und den Sonnenrädern des ersten Planetengetriebes angeordnet.

Das Kopplungselement überträgt vorzugsweise ein mittels des Antriebsteils eingeleitetes Antriebsmoment in Abhängigkeit des gewählten Ganges vom ersten Planetengetriebe entweder zur ersten Abtriebskupplung, von der es dann auf die Nabenhülse übertragen wird, oder durch die erste Abtriebskupplung zum zweiten Planetengetriebe, von dem es dann über den zweiten Planetenradträger und die zweite Abtriebskupplung auf die Nabenhülse übertragen wird.

Die Steuervorrichtung kann so betätigt werden, dass durch Steuern der vorzugsweise zwei Sonnenradkupplungen am ersten Planetengetriebe und der Abtriebswahleinrichtung eine Vielzahl von Gängen zur Verfügung gestellt wird.

Bei einer vorteilhaften Ausgestaltung ist das erste Planetengetriebe zweistufig und das zweite Planetengetriebe einstufig ausgebildet, so dass sich ein Fünfganggetriebe ergibt.

Andere Aufgaben, Vorteile und nützliche Merkmale der vorliegenden Erfindung werden Fachleuten aus der nachfolgenden detaillierten Beschreibung ersichtlich, die in Verbindung mit den beigefügten Zeichnungen eine bevorzugte Ausführungsform der vorliegenden Erfindung offenbart.

### Kurzbeschreibung der Zeichnungen

- Figur 1: ist ein Teillängsschnitt einer in einer Mehrgangnabe eines Fahrrads eingebauten Getriebeanordnung gemäß der vorliegenden Erfindung, mit dargestelltem Momentübertragungspfad des ersten Gangs;
- Figur 2: ist eine perspektivische Darstellung eines Kopplungselements, das bei der Getriebeanordnung gemäß der vorliegenden Erfindung einsetzbar ist;
- Figur 3: ist ein Teillängsschnitt der in einer Mehrgangnabe eines Fahrrads eingebauten Getriebeanordnung gemäß der vorliegenden Erfindung, mit dargestelltem Momentübertragungspfad des zweiten Gangs;
- Figur 4: ist ein Teillängsschnitt der in einer Mehrgangnabe eines Fahrrads eingebauten Getriebeanordnung gemäß der vorliegenden Erfindung, mit dargestelltem Momentübertragungspfad des dritten Gangs;
- Figur 5: ist ein Teillängsschnitt der in einer Mehrgangnabe eines Fahrrads eingebauten Getriebeanordnung gemäß der vorliegenden Erfindung, mit dargestelltem Momentübertragungspfad des vierten Gangs;
- Figur 6: ist ein Teillängsschnitt der in einer Mehrgangnabe eines Fahrrads eingebauten Getriebeanordnung gemäß der vorliegenden Erfindung, mit dargestelltem Momentübertragungspfad des fünften Gangs.

### Beschreibung eines bevorzugten Ausführungsbeispiels

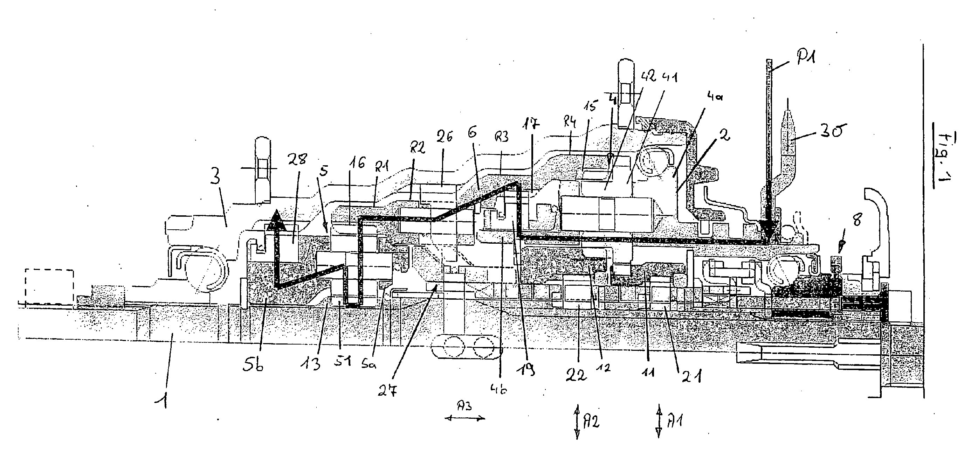

Nachfolgend wird unter Bezugnahme auf die Figuren 1 bis 6 ein bevorzugtes Ausführungsbeispiel der vorliegenden Erfindung näher beschrieben.

Die Figur 1 zeigt eine Mehrgangnabe mit einer Getriebeanordnung gemäß der vorliegenden Erfindung, die zum Einsatz bei einem Fahrrad geeignet ist. Der dargestellte Aufbau umfasst im Wesentlichen, aber nicht einschränkend, eine an einem Fahrradrahmen befestigte feststehende Welle 1, ein drehbares Antriebsteil 2, eine drehbare Nabenhülse 3, eine erste Abtriebskupplung 26, eine zweite Abtriebskupplung 28, eine Abtriebswahleinrichtung 27, ein Kettenrad 30, ein erstes Planetengetriebe 4, ein zweites Planetengetriebe 5 und ein Kopplungselement 6.

Das erste Planetengetriebe 4 umfasst einen Planetenradträger, der einen antriebsseitigen Teil 4a und einen abtriebsseitigen Teil 4b aufweist. Der Planetenradträger 4a, 4b ist dabei so ausgelegt, dass er gleichzeitig als vom Kettenrad 30 angetriebener Antreiber 2 wirkt. Das erste Planetengetriebe 4 weist ein erstes Sonnenrad 11 und ein zweites Sonnenrad 12 auf, die beide auf der feststehenden Welle 1 in Längsrichtung unverschieblich gelagert sind. Das erste Sonnenrad 11 kann mit zumindest einem ersten Planetenrad 41 und das zweite Sonnenrad 12 kann mit zumindest einem zweiten Planetenrad 42 in Eingriff gebracht werden, wobei die ersten Planetenräder 41 einen größeren Durchmesser als die zweiten Planetenräder 42 aufweisen. Zwischen den Sonnenrädern 11 und 12 und der feststehenden Welle 1 ist jeweils eine Sonnenradkupplung 21 und 22 angeordnet. Die Sonnenradkupplungen 21 und 22 können selektiv gesteuert werden, dass ein Antriebsmoment übertragen oder nicht übertragen wird. Die Sonnenradkupplungen 21 und 22 werden mittels einer an der feststehenden Welle 1 bereitgestellten Steuereinrichtung 8, die vorzugsweise mittels eines nicht gezeigten Seilzugs von Außen betätigt wird, gesteuert, indem eine Drehbewegung der Steuereinrichtung 8 zu einer Aktivierung bzw. Deaktivierung der Sonnenradkupplungen 21 und 22 führt. Durch die Drehung werden in Umfangsrichtung angeordnete Steuervorsprünge entsprechend ausgerichtet, was durch Pfeile A1 und A2 in Figur 1 angedeutet ist. Die Steuereinrichtung 8 erstreckt sich im Wesentlichen von einem antriebsseitigen Endbereich der feststehenden Welle 1 bis zu der Abtriebswahleinrichtung 27.

Die Sonnenradkupplungen 21 und 22 und somit das erste Planetengetriebe 4 können folglich mittels der Steuereinrichtung 8 so betätigt werden, dass daraus eine Vielzahl von Gängen resultiert. Das Planetengetriebe 4 ist zweistufig ausgebildet, das heißt, hat Planetenradpaare, die Planetenräder (41, 42) mit unterschiedlichen Durchmessern aufweisen.

Das zweite Planetengetriebe 5 weist zumindest ein Planetenrad 51 und einen Planetenradträger auf, der einen antriebsseitigen Teil 5a und einen abtriebsseitigen Teil 5b umfasst. Das zweite Planetengetriebe 5 ist einstufig ausgebildet, hat also keine Planetenräder mit unterschiedlichem Durchmesser, wobei es nicht mittels einer Sonnenradkupplung direkt gesteuert wird. Das zumindest eine Planetenrad 51 steht mit einem Sonnenrad 13 an der feststehenden Welle 1 in Eingriff. Zwischen dem abtriebsseitigen Teil 5b des Planetenradträgers 5a, 5b und der Nabenhülse 3 ist eine Abtriebskupplung 28 angeordnet, die einseitig wirksam ausgebildet sein kann. Die beiden in der Figur 1 dargestellten Planetenradträger 4a, 4b und 5a, 5b sind jeweils einstückig ausgebildet.

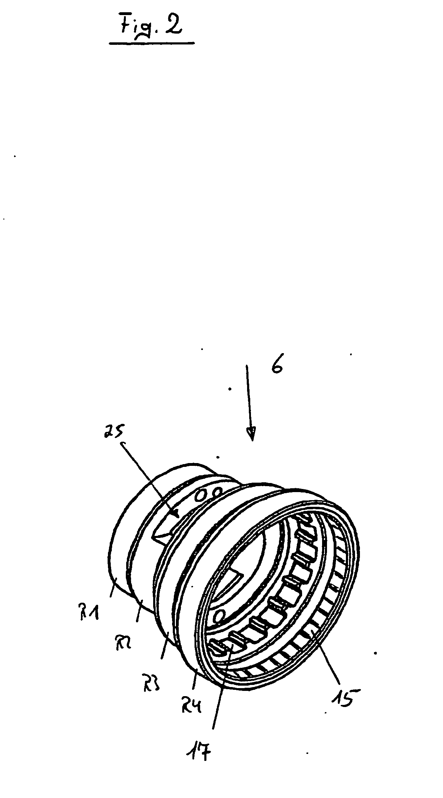

Wie dies in der Figur 1 gezeigt ist, ist ein einstückig ausgebildetes Kopplungselement 6, das in einer perspektivischen Darstellung auch in der Figur 2 gezeigt ist, zwischen dem ersten Planetengetriebe 4 und dem zweiten Planetengetriebe 5 angeordnet. Das Kopplungselement 6 koppelt das erste Planetengetriebe 4 so mit dem zweiten Planetengetriebe 5, dass eine permanente Synchronisation zwischen den zwei Planetengetrieben 4, 5 erreicht wird. Das Kopplungselement 6 ist röhrenförmig ausgebildet und umfasst im vorliegenden Ausführungsbeispiel vier unterschiedliche Außendurchmesser R1, R2, R3 und R4, die jeweils aus einer schrägen Abtreppung oder einem schrägen Versatz resultieren, wobei der Außendurchmesser ausgehend vom ersten Planetengetriebe 4 zum zweiten Planetengetriebe 5 hin abnimmt. Fachleuten ist es ersichtlich, dass ein großer Außendurchmesser mit einem großen Innendurchmesser entsprechend einhergeht und kleiner Außendurchmesser mit einem kleinen Innendurchmesser entsprechend einhergeht.

Das Kopplungselement 6 weist an seinem antriebsseitigen Ende einen inneren Zahnkranz 15, der mit dem zumindest einen Planetenrad 42 in Eingriff steht, und an seinem abtriebsseitigen Ende einen inneren Zahnkranz 16 auf, der mit zumindest einem Planetenrad 51 in Eingriff steht. Da der Durchmesser des Kopplungselements 6 am antriebsseitigen Ende größer ist als am abtriebsseitigen Ende, weist der Zahnkranz 15 folglich einen größeren Durchmesser als der Zahnkranz 16 auf. Im Bereich zwischen dem ersten Planetengetriebe 4 und der ersten Abtriebskupplung 26 umfasst das Kopplungselement 6 an einer Innenfläche einen dritten Zahnkranz 17. Dieser dritte innere Zahnkranz 17 im Bereich R3 kann mit einer einseitig wirksamen Kupplung 19 in Eingriff gebracht werden. Die Kupplung 19 ist zwischen dem dritten Zahnkranz 17 und dem abtriebsseitigen Teil 4b des Planetenradträgers 4a, 4b des ersten Planetengetriebes 4 angeordnet, so dass diese miteinander in Wirkverbindung stehen. Vorzugsweise erfolgt die Wirkverbindung mittels Antriebsklinken, die in peripheren Aussparungen an dem abtriebsseitigen Teil 4b des Planetenradträgers 4a, 4b bereitgestellt und zu dem dritten Zahnkranz 17 hin gespannt sind. Soll ein Antriebsmoment übertragen werden, gelangen die Antriebsklinken in Momentübertragungseingriff mit dem dritten Zahnkranz 17. Soll kein Antriebsmoment übertragen werden, gleiten die Antriebsklinken über den dritten Zahnkranz 17, ohne einen Momentübertragungseingriff einzugehen.

Abtriebsseitig von dem dritten Zahnkranz 17 befindet sich die erste Abtriebskupplung 26, die mittels eines Schafts mit dem Kopplungselement 6 beidseitig in Eingriff steht.

Wie dies auch in der Figur 2 gezeigt ist, weist das Kopplungselement 6 zur Aufnahme der ersten Abtriebskupplung 26 periphere Aussparungen bzw. Durchlässe 25 auf. Des Weiteren ist eine Abtriebswahleinrichtung 27 bereitgestellt, die längsverschieblich mittels der Steuereinrichtung 8 betätigbar ist, wie dies durch den Pfeil A3 in der Figur 1 angedeutet ist. Durch eine entsprechende Drehbewegung der Steuereinrichtung 8 wird die Abtriebswahlreinrichtung 27 in Längsrichtung der feststehenden Welle 1 betätigt. Dadurch kann der Abtrieb zur Nabenhülse 3 entweder über die erste oder die zweite Abtriebskupplung 26, 28 selektiv gesteuert werden. Bei dem vorliegenden Ausführungsbeispiel können durch Betätigen der Steuereinrichtung 8 und der damit verbundenen Steuerung der Sonnenradkupplungen 21, 22 und der Abtriebswahleinrichtung 27 fünf unterschiedliche Gangstufen zur Verfügung gestellt werden.

Der vorstehend beschriebene Aufbau ermöglicht es, dass das erste Planetengetriebe 4 und das zweite Planetengetriebe 5 so miteinander gekoppelt sind, dass eine permanente Synchronisation erzielt wird. Durch den erfindungsgemäßen Aufbau der Getriebeanordnung erfolgt der Gangwechsel für einen Fahrer angenehmer, wodurch gleichzeitig das Fahrgefühl während des Gangwechsels verbessert wird. Dies ist möglich, obwohl der beschriebene Aufbau einfach, kompakt, schlank und trotzdem zuverlässig im Betrieb ist.

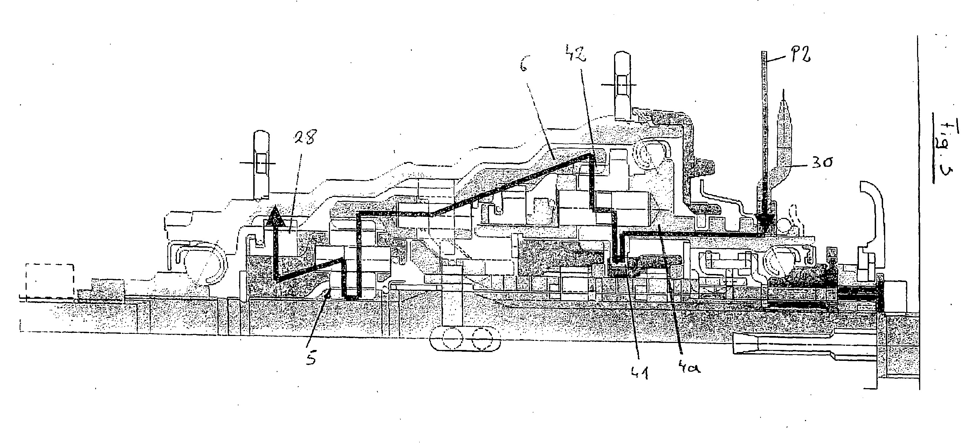

Wie dies in den Figuren 1 und 3 bis 6 gezeigt ist, wird das von dem Antreiber 2 bzw. dem antriebsseitigen Teil 4a des Planetenradträgers 4a, 4b des ersten Planetengetriebes 4 eingeleitete Antriebsmoment über unterschiedliche Pfade zur Nabenhülse 3 hin übertragen. In den Figuren 3 bis 6 sind jeweils die wesentlichen Bauteile mit Bezugszeichen versehen.

Ein Pfad P1 in der Figur 1 stellt den Übertragungsweg des Antriebsmoments bezüglich des ersten Gangs vom Kettenrad 30 über die Getriebeanordnung zur Nabenhülse 3 dar.

Ein Pfad P2 in der Figur 3 stellt den Übertragungsweg des Antriebsmoments bezüglich des zweiten Gangs vom Kettenrad 30 über die Getriebeanordnung zur Nabenhülse 3 dar.

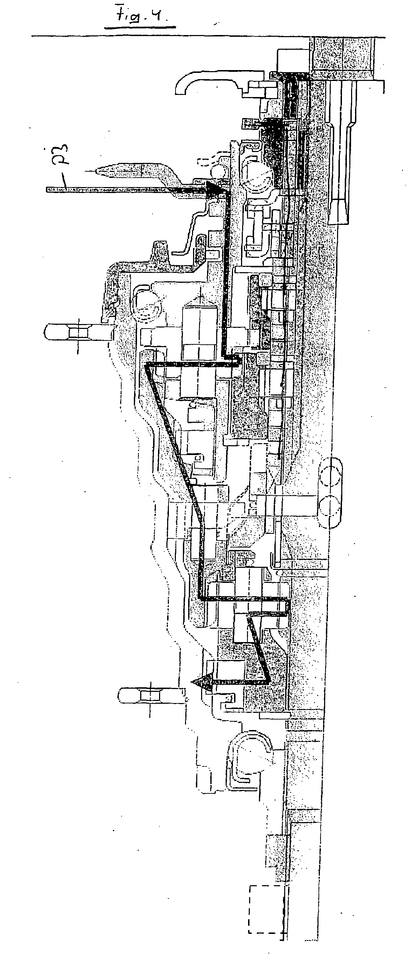

Ein Pfad P3 in der Figur 4 stellt den Übertragungsweg des Antriebsmoments bezüglich des dritten Gangs vom Kettenrad 30 über die Getriebeanordnung zur Nabenhülse 3 dar.

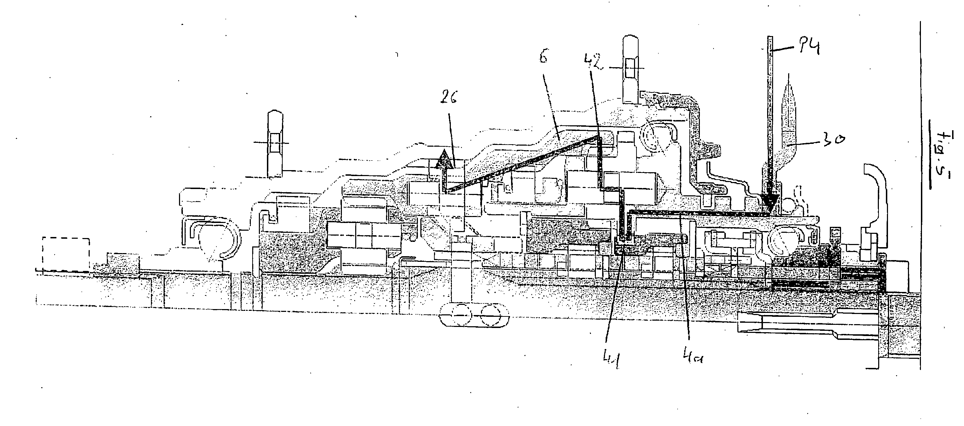

Ein Pfad P4 in der Figur 5 stellt den Übertragungsweg des Antriebsmoments bezüglich des vierten Gangs vom Kettenrad 30 über die Getriebeanordnung zur Nabenhülse 3 dar.

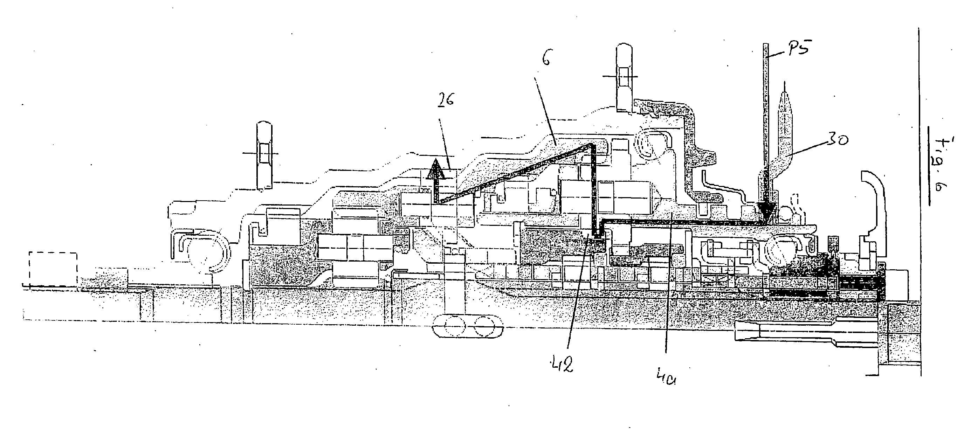

Ein Pfad P5 in der Figur 6 stellt den Übertragungsweg des Antriebsmoments bezüglich des fünften Gangs vom Kettenrad 30 über die Getriebeanordnung zur Nabenhülse 3 dar.

In der nachfolgenden Tabelle 1 ist mit dem Zeichen "-" ein Zustand bezeichnet, bei dem die Kupplungen nicht in Betriebsstellung sind, das heißt, kein Antriebsmoment übertragen. Mit dem Zeichen "0" ist ein Zustand bezeichnet, bei dem die Kupplungen in Betriebsstellung sind, das heißt, ein Antriebsmoment übertragen. Wie anhand der Figuren 1 und 3 bis 6 in Verbindung mit den Pfaden P1 bis P5 ersichtlich ist, überträgt die zweite Abtriebskupplung 28 immer dann ein Antriebsmoment, wenn das Antriebsmoment einen Pfad über das zweite Planetengetriebe 5 nimmt. Das Zeichen "X" bezeichnet einen Zustand, bei dem die zweite Abtriebskupplung 28 ein Antriebsmoment überträgt, wohingegen das Zeichen "n" einen Zustand bezeichnet, bei dem die zweite Abtriebskupplung 28 kein Antriebsmoment überträgt.

**Tabelle 1**

| Kupplung / Gang | 21 | 22 | 19 | 26 | 28 |
|---|---|---|---|---|---|
| 1 | - | - | 0 | - | X |
| 2 | 0 | - | - | - | X |
| 3 | - | 0 | - | - | X |
| 4 | 0 | - | - | 0 | n |
| 5 | - | 0 | - | 0 | n |

Aus den Figuren 1 und 3 bis 6 wird ersichtlich, dass unabhängig vom Momentübertragungspfad P 1 bis P5, das heißt von der vom Fahrer gewählten Gangstufe, das erste Planetengetriebe 4 mit dem zweiten Planetengetriebe 5 permanent gekoppelt ist und somit eine Synchronisation der zwei Planetengetriebe 4, 5 erreicht wird. Vorteilhaft ist, dass das zweite Planetengetriebe 5 nicht aufwendig mittels einer Mechanik gesteuert werden muss, die üblicherweise aus anhand einer Steuereinrichtung gesteuerten Sonnenradkupplungen oder einer antriebsseitig von diesem befindlichen komplizierten Kupplungsmechanik besteht. Das zweite Planetengetriebe 5 kann also mit dem Kopplungselement 6 und dem Sonnenrad 13 permanent in Eingriff stehen, überträgt im vorliegenden Ausführungsbeispiel dennoch nur ein Antriebsmoment in den Gangstufen 1 bis 3.

Während lediglich eine bevorzugte Ausführungsform der vorliegenden Erfindung beschrieben und dargestellt worden ist, wird es für Fachleute in Kenntnis dieser Offenbarung ersichtlich sein, dass verschiedene Modifikationen, Änderungen, Verbesserungen und Variationen gemacht werden können, ohne vom Schutzumfang dieser Erfindung, wie dieser in den Ansprüchen definiert, abzuweichen.

Das vorstehend beschriebene Ausführungsbeispiel umfasst zwei Planetengetriebe. Fachleuten dürfte es jedoch ersichtlich sein, dass die Erfindung nicht auf zwei Planetengetriebe beschränkt ist, sondern auch auf drei oder mehr Planetengetriebe angewendet werden kann. Des Weiteren ist die Erfindung nicht auf ein erstes zweistufiges und ein zweites einstufiges Planetengetriebe beschränkt. Vielmehr können die Anzahl, die Stufigkeit sowie die Positionierung der Planetengetriebe den jeweiligen Erfordernissen, wie beispielsweise der Anzahl der Gangstufen, Übersetzungs-/ Untersetzungsgetriebe, etc., angepasst werden. Außerdem können die als vorzugsweise einstückig beschriebenen Bauteile auch mehrteilig ausgeführt werden, wenn dies erforderlich sein sollte.

## Patentansprüche

1. Getriebeanordnung für eine Mehrgangnabe, insbesondere für ein Fahrrad, aufweisend:
ein erstes Planetengetriebe (4) und zumindest ein zweites Planetengetriebe (5);
und
ein röhrenförmiges Kopplungselement (6) mit Zahnkränzen (15, 16) an seinen axialen unterschiedliche Durchmesser aufweisenden Endbereichen zum jeweiligen Eingriff mit dem ersten Planetengetriebe (4) und dem zumindest einen zweiten Planetengetriebe (5), so dass eine permanente Synchronisation zwischen den zumindest zwei Planetengetrieben (4, 5) erreicht wird, **dadurch gekennzeichnet, dass** das Kopplungselement (6) zwischen den Planetengetrieben (4, 5) einen dritten Zahnkranz (17) umfasst wobei eine einseitig wirksame Kupplungseinrichtung (19) zwischen dem dritten Zahnkranz (17) und einem abtriebsseitigen Teil (4b) eines Planetenradträgers (4a, 4b) des ersten Planetengetriebes (4) angeordnet ist, damit eine Wirkverbindung zwischen dem dritten Zahnkranz (17) und dem abtriebsseitigen Teil (4b) des ersten Planetenradträgers. (4a, 4b) bereitgestellt werden kann.

2. Getriebeanordnung gemäß Anspruch 1, wobei das Kopplungselement (6) auf der Seite des Antriebs einen größeren Durchmesser aufweist als auf der Seite des Abtriebs, wobei die daraus resultierende Verjüngung kontinuierlich und/oder mittels Versätzen erreicht wird.

3. Getriebeanordnung gemäß einem der vorherigen Ansprüche, wobei das Kopplungselement (6) mit einem Schaft einer Abtriebskupplung (26) zwischen dem dritten Zahnkranz (17) und einem der Planetengetriebe (4, 5) beidseitig in Eingriff steht.

4. Getriebeanordnung gemäß einem der vorherigen Ansprüche, wobei das Kopplungselement (6) einstückig ausgebildet ist.

5. Getriebeanordnung gemäß einem der vorherigen Ansprüche, wobei eine Abtriebswahleinrichtung (27) bereitgestellt ist, die mittels einer Steuereinrichtung (8) längsverschieblich betätigbar ist, so dass der Abtrieb zu einer Nabenhülse (3) entweder über die erste Abtriebskupplung (26) oder über eine zweite Abtriebskupplung (28) erfolgt.

6. Getriebeanordnung gemäß einem der vorherigen Ansprüche, wobei die zweite Abtriebskupplung (28) mit dem abtriebsseitigen Teil (5b) des Planetenradträgers (5a, 5b) des zweiten Planetengetriebes (5) in Verbindung steht.

7. Getriebeanordnung gemäß einem der vorherigen Ansprüche, wobei ein antriebsseitiger Teil (4a) des Planetenradträges (4a, 4b) des ersten Planetengetriebes (4) dazu geeignet ist, als Antrieb (2) zu wirken.

8. Getriebeanordnung gemäß einem der vorherigen Ansprüche, wobei zumindest eine mittels der Steuereinrichtung (8) betätigbare Sonnenradkupplung (21, 22) zwischen zumindest einem Sonnenrad (11, 12) des ersten Planetengetriebes (4) und einer feststehenden Welle (1) angeordnet ist.

9. Getriebeanordnung gemäß einem der vorherigen Ansprüche, wobei das Kopplungselement (6) dazu geeignet ist, das durch den Antrieb (2) eingeleitete Antriebsdrehmoment in Abhängigkeit des gewählten Ganges vom ersten Planetengetriebe (4) entweder zur ersten Abtriebskupplung (26) zu übertragen, von der es dann auf die Nabenhülse (3) übertragen wird, oder durch die erste Abtriebskupplung (26) zum zweiten Planetengetriebe (5) zu übertragen, von dem es dann über den zweiten Planetenradträger (5a) und die zweite Abtriebskupplung (28) auf die Nabenhülse (3) übertragen wird.

10. Getriebeanordnung gemäß einem der vorherigen Ansprüche, wobei die Steuereinrichtung (8) so betätigbar ist, dass sich durch Ansteuerung zumindest einer Sonnenradkupplung (21, 22) und der Abtriebswahleinrichtung (27) eine Vielzahl von Gängen ergibt.

11. Getriebeanordnung gemäß einem der vorherigen Ansprüche, wobei das erste Planetengetriebe (4) zweistufig und das zweite Planetengetriebe (5) einstufig ausgebildet ist, so dass sich ein Fünfganggetriebe ergibt.

## Claims

1. Gearing mechanism for a multi-speed hub, in particular for a bicycle, comprising a first planetary gearing (4) and at least one second planetary gearing (5); and a tubular coupling member (6) with toothed rings (15, 16) at its axial end regions having different diameters for respective engagement with the first planetary gearing (4) and the at least one second planetary gearing (5) such that a permanent synchronisation between the at least two planetary gearings (4, 5) is achieved, **characterised in that** the coupling member (6) includes a third toothed ring (17) between the planetary gearings (4, 5), wherein a one way clutch (19) is arranged between the third toothed ring (17) and an output-sided part (4b) of a planetary gear carrier (4a, 4b) of the first planetary gearing (4) such that an operative connection between the third toothed ring (17) and the output-sided part (4b) of the first planetary gear carrier (4a, 4b) can be provided.

2. Gearing mechanism according to claim 1, wherein the coupling member (6) has a larger diameter on the driver side than on the output side, wherein the tapering resulting therefrom is achieved continuously and/or by means of steps.

3. Gearing mechanism according to anyone of the preceding claims, wherein the coupling member (6) is engaged both sided with a shaft of an output-clutch (26) between the third toothed ring (17) and one of the planetary gearings (4, 5).

4. Gearing mechanism according to anyone of the preceding claims, wherein the coupling member (6) is formed integrally.

5. Gearing mechanism according to anyone of the preceding claims, wherein an output selector device (27) is provided which can be actuated in a longitudinally displaceable manner by means of a control device (8) such that the output to a hub sleeve (3) takes place either via the first output clutch (26) or via a second output clutch (28).

6. Gearing mechanism according to anyone of the preceding claims, wherein the second output clutch (28) is connected to an output sided part (5b) of a planetary gear carrier (5a, 5b) of the second planetary gear (5).

7. Gearing mechanism according to anyone of the preceding claims, wherein a driver sided part (4a) of the planetary gear carrier (4a, 4b) of the first planetary gearing is adapted to serve as a driver (2).

8. Gearing mechanism according to anyone of the preceding claims, wherein at least one sun gear clutch (21, 22) operative by means of the control device (8) is arranged between at least one sun gear (11, 12) of the first planetary gearing (4) and a fixed shaft (1).

9. Gearing mechanism according to anyone of the preceding claims, wherein the coupling member (6) is adapted to transmit a driving torque introduced by the driver (2) depending on the selected gear ratio from the first planetary gearing (4) either to the first output clutch (26) from which it is transmitted to the hub sleeve (3) or through the first output clutch (26) to the second planetary gearing (5) from which it is transmitted via the second planetary gear carrier (5a) and the second output clutch (28) to the hub sleeve (3).

10. Gearing mechanism according to anyone of the preceding claims, wherein the control device (8) is operative such that via controlling at least one sun gear clutch (21, 22) and the output selector device (27) a plurality of gear ratios results.

11. Gearing mechanism according to anyone of the preceding claims, wherein the first planetary gearing is formed in a two step manner and the second planetary gearing (5) is formed in a one step manner such that a five-speed gear hub is provided.

## Revendications

1. Agencement de transmission pour un moyeu à vitesse multiple, en particulier pour une bicyclette, comprenant :
un premier engrenage planétaire (4) et au moins un deuxième engrenage planétaire (5);
et un élément de couplage tubulaire (6) avec des couronnes dentées (15, 16) au niveau de leurs domaines d'extrémité axiale comprenant des diamètres différents pour être en prise respectivement avec le premier engrenage planétaire (4) et le au moins un deuxième engrenage planétaire (5), de sorte qu'une synchronisation permanente entre les au moins deux engrenages planétaires (4, 5) est obtenue, **caractérisé en ce que** l'élément de couplage (6) comprend une troisième couronne dentée (17) entre les engrenages planétaires (4, 5), dans lequel un dispositif d'embrayage unidirectionnel (19) est agencé entre la troisième couronne dentée (17) et une partie du côté entrainé (4b) d'un support de satellite (4a, 4b) du premier engrenage planétaire (4), de sorte qu'une liaison de travail entre la troisième couronne dentée (17) et la partie du côté entrainé (4b) du premier support de satellite (4a, 4b) puisse être obtenue.

2. Agencement de transmission selon la revendication 1, dans lequel l'élément de couplage (6) comprend un diamètre supérieur du côté de l'entrainement par rapport au côté entrainé, le rétrécissement qui en résulte étant obtenu de manière continue et/ou au moyen de décalages.

3. Agencement de transmission selon l'une quelconque des revendications précédentes, dans lequel l'élément de couplage (6) est en prise des deux côtés avec un arbre d'un embrayage de sortie (26) entre la troisième couronne dentée (17) et un des engrenages planétaires (4, 5).

4. Agencement de transmission selon l'une quelconque des revendications précédentes, dans lequel l'élément de couplage (6) est formé d'un seul morceau (monobloc).

5. Agencement de transmission selon l'une quelconque des revendications précédentes, dans lequel un dispositif de choix de sortie (27) est pourvu, qui peut être actionné par un déplacement longitudinal au moyen d'un dispositif de commande (8) , de sorte que la sortie vers un manchon de moyeu (3) est réalisé soit par l'intermédiaire du premier embrayage de sortie (26) ou par un deuxième embrayage de sortie (28).

6. Agencement de transmission selon l'une quelconque des revendications précédentes, dans lequel le deuxième embrayage de sortie (28) est relié avec la partie du côté entrainé (5b) du support de satellite (5a, 5b) du deuxième engrenage planétaire (5).

7. Agencement de transmission selon l'une quelconque des revendications précédentes, dans lequel une partie du côté d'entraînement (4a) du support de satellite (4a, 4b) du premier engrenage planétaire (4) est agencée de manière à agir en tant qu'actionneur (2).

8. Agencement de transmission selon l'une quelconque des revendications précédentes, dans lequel au moins un embrayage de roue solaire (21, 22) qui peut être actionné au moyen du dispositif de commande (8) est agencé entre au moins une roue solaire (11, 12) du premier engrenage planétaire (4) et un arbre fixe (1).

9. Agencement de transmission selon l'une quelconque des revendications précédentes, dans lequel l'élément de couplage (6) permet de transférer le moment d'entrainement déclenché par l'actionneur (2) en fonction de la vitesse choisie du premier engrenage planétaire (4), soit au premier embrayage de sortie (26), à partir duquel il sera ensuite transféré sur le manchon de moyeu (3), soit par le premier embrayage de sortie (26) au deuxième engrenage planétaire (5), à partir duquel il sera ensuite transféré sur le manchon de moyeu (3) via le deuxième support de satellite (5a) et le deuxième embrayage de sortie (28).

10. Agencement de transmission selon l'une quelconque des revendications précédentes, dans lequel le dispositif de commande (8) peut être actionné de telle sorte qu'il en découle une pluralité de vitesses à travers la sélection d'au moins un embrayage de roue solaire (21, 22) et le dispositif de choix de sortie (27).

11. Agencement de transmission selon l'une quelconque des revendications précédentes, dans lequel le premier engrenage planétaire (4) est construit en deux étages et le deuxième engrenage planétaire (5) est construit en un seul étage, de sorte qu'il en résulte une transmission à cinq vitesses.
